(19) Europäisches Patentamt / European Patent Office / Office européen des brevets

(11) **EP 3 977 667 B1**

(12) **FASCICULE DE BREVET EUROPEEN**

(45) Date de publication et mention de la délivrance du brevet:
**10.12.2025 Bulletin 2025/50**

(21) Numéro de dépôt: **20743190.9**

(22) Date de dépôt: **27.05.2020**

(51) Classification Internationale des Brevets (IPC):
**H04L 9/06** *(2006.01)*

(52) Classification Coopérative des Brevets (CPC):
**H04L 9/008; H04L 9/06;** H04L 2209/76

(86) Numéro de dépôt international:
**PCT/FR2020/050893**

(87) Numéro de publication internationale:
**WO 2020/240135 (03.12.2020 Gazette 2020/49)**

(54) **MÉTHODE DE TRAITEMENT CONFIDENTIEL DE DONNÉES D'UN VÉHICULE**

VERFAHREN ZUR VERTRAULICHEN VERARBEITUNG VON DATEN EINES FAHRZEUGS

METHOD FOR CONFIDENTIALLY PROCESSING DATA OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2019 FR 1905644**

(43) Date de publication de la demande:
**06.04.2022 Bulletin 2022/14**

(73) Titulaire: **Commissariat à l'Energie Atomique et aux Energies Alternatives
75015 Paris (FR)**

(72) Inventeurs:
• **BOUDGUIGA, Aymen**
  **92160 Antony (FR)**
• **NGUYEN, Than Hai**
  **75005 Paris (FR)**
• **STAN, Oana**
  **91300 Massy (FR)**

(74) Mandataire: **Santarelli
Tour Trinity
1 bis Place de la Défense
92400 Courbevoie (FR)**

(56) Documents cités:
• **RIZZO NICHOLAS ET AL: "Privacy preserving driving style recognition", 2015 INTERNATIONAL CONFERENCE ON CONNECTED VEHICLES AND EXPO (ICCVE), IEEE, 19 October 2015 (2015-10-19), pages 232 - 237, XP032889582, DOI: 10.1109/ICCVE.2015.42**
• **YARKIN DOROZ ET AL: "Toward Practical Homomorphic Evaluation of Block Ciphers Using Prince", IACR, INTERNATIONAL ASSOCIATION FOR CRYPTOLOGIC RESEARCH, vol. 20140401:064853, 31 March 2014 (2014-03-31), pages 1 - 12, XP061015781**
• **MIHAI TOGAN ET AL: "THE PUBLISHING HOUSE HOMOMORPHIC EVALUATION OF SPECK CIPHER", 1 January 2015 (2015-01-01), pages 375 - 384, XP055659754, Retrieved from the Internet <URL:https://acad.ro/sectii2002/proceedings/doc2015-3s/13-Togan.pdf>**
• **"12th European Conference on Computer Vision, ECCV 2012", vol. 8469, 1 January 2014, SPRINGER BERLIN HEIDELBERG, Berlin, Heidelberg, ISBN: 978-3-642-33862-5, ISSN: 0302-9743, article TANCRÈDE LEPOINT ET AL: "A Comparison of the Homomorphic Encryption Schemes FV and YASHE : 7th International Conference on Cryptology in Africa, Marrakesh, Morocco, May 28-30, 2014. Proceedings", pages: 318 - 335, XP055659758, 031559, DOI: 10.1007/978-3-319-06734-6_20**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention concerne le domaine général des services aux automobilistes. Elle s'applique notamment à la caractérisation de la conduite d'un véhicule à partir de ses données cinématiques. Elle relève également du domaine du traitement confidentiel de données privées.

### Etat de la technique antérieure

Les données générées par les véhicules, et plus particulièrement par des capteurs embarqués à bord de ceux-ci, peuvent être utilisées pour offrir de nombreux services.

Un des services les plus prometteurs est celui des assurances personnalisées: à partir du relevé des données cinématiques d'une voiture, il est possible de caractériser le type de conduite d'un automobiliste. Le conducteur ayant souscrit à ce type de service, connu sous le nom de « *pay how you drive* », verra ainsi le montant de sa prime d'assurance être modulé en fonction de son style de conduite : un conducteur à profil de conduite prudent pourra s'acquitter d'un montant plus faible qu'un conducteur à profil de conduite dangereux.

On trouvera par exemple la description d'une méthode de caractérisation du type de conduite d'un automobiliste à partir des données cinématiques de son véhicule dans la demande US-A-2019/0023279.

Un autre service s'adressant aux automobilistes est celui du diagnostic, voire de la maintenance prédictive. A partir des données recueillies sur le véhicule, il est possible de détecter la défaillance ou l'état d'usure d'une pièce et d'anticiper son remplacement en passant automatiquement commande auprès du fournisseur de pièces détachées ou de l'équipementier. Il est également possible à partir du profil de conduite du conducteur de prédire la fréquence des opérations de maintenance.

Par ailleurs les équipementiers peuvent compiler les données issues d'une flotte de véhicules et en faire un traitement statistique de manière à prédire les quantités à produire.

Enfin, les données générées par les véhicules peuvent être exploitées pour effectuer un profilage des conducteurs et leur offrir, via des applications, des services adaptés à leurs différents profils.

Il est clair cependant que ces données sont généralement très sensibles et de caractère privé. Ainsi, elles peuvent permettre de remonter à l'adresse du conducteur, à ses trajets, ses horaires de déplacement, ses lieux de consommation, etc. En outre, le Règlement Général de la Protection des Données (RGPD) 2016/679 est entré en vigueur en mai 2018. Celui-ci requiert notamment que des mesures techniques soient prises pour garantir la protection des données personnelles et la restriction de leur accès selon la finalité spécifique de chaque traitement. En particulier, il est nécessaire de protéger l'accès à des données qui pourraient révéler le comportement ou les habitudes de vie d'un utilisateur donné.

Une méthode de classification du style de conduite d'un véhicule respectant la confidentialité des données a été décrite dans l'article de N. Rizzo et al. intitulé « Privacy preserving driving style recognition » publié dans Proc. of International Conference on Connected Vehicles and Expo (ICCVE), 19-23 Oct. 2015. Toutefois, la méthode proposée doit être exécutée par le véhicule lui-même, ce qui n'est pas toujours compatible avec la capacité calculatoire embarquée dans le véhicule. En outre, elle n'est pas scalable dans la mesure où chaque prestataire de service doit alors communiquer individuellement avec le véhicule pour lui faire effectuer un traitement spécifique des données. Enfin, elle manque de flexibilité au sens où elle ne permet pas aisément de mettre en place de nouveaux traitements des données ni un traitement conjoint de données issues d'une pluralité de véhicules.

L'objet de la présente invention est de proposer une méthode de traitement confidentiel des données d'un véhicule, en particulier un classement du type de conduite d'un véhicule à partir de ses données cinématiques, qui respecte la confidentialité de ces données tout en ne présentant pas les limitations de l'art antérieur.

### Présentation de l'invention

La présente invention est définie par une méthode de traitement confidentiel de données d'un véhicule, les données cinématiques étant transmises par une passerelle embarquée du véhicule à un point d'accès d'un réseau externe à ce dernier et le résultat du traitement étant transmis à un serveur d'un fournisseur de service (240), le fournisseur ayant généré un couple de clé privée - clé publique d'un cryptosystème asymétrique de chiffrement homomorphe, ladite méthode étant spécifique en ce que :

- le véhicule génère une clé secrète d'un cryptosytème de chiffrement symétrique et chiffre ladite clé secrète au moyen de la clé publique de chiffrement homomorphe ;
- le véhicule chiffre lesdites données au moyen la clé secrète de chiffrement symétrique;

- le véhicule transmet la clé secrète chiffrée en homomorphe ainsi que les données ainsi chiffrées au point d'accès, ledit point d'accès effectuant un second chiffrement des données ainsi chiffrées, au moyen de la clé publique de chiffrement homomorphe , pour obtenir des données doublement chiffrées puis, au moyen de la clé secrète chiffrée en homomorphe, un déchiffrement dans le domaine homomorphe des données doublement chiffrées, pour obtenir des données chiffrées en homomorphe, et les transmettant à une plateforme de calcul ;
- la plateforme de calcul effectue, dans le domaine homomorphe, le traitement des données reçues du point d'accès et transmet le résultat du traitement, sous forme chiffrée en homomorphe, au serveur du fournisseur de service.

Le traitement confidentiel peut être notamment une classification desdites données, le résultat du traitement donnant une classe, parmi une pluralité de classes prédéterminées, à laquelle appartiennent lesdites données ou les probabilités respectives que lesdites données appartiennent à ces classes prédéterminées.

La classification est par exemple une classification par hyperplans, chaque hyperplan étant défini par une fonction affine dans le domaine des clairs.

Lesdites données comprennent typiquement des données cinématiques du véhicule. Les classes prédéterminées peuvent être des classes de dangerosité de conduite du véhicule.

Selon une variante, la classification est obtenue par une fonction de classification comprenant en argument les données cinématiques d'une pluralité de véhicules.

Avantageusement, le chiffrement symétrique est un chiffrement par flot de clé.

Le chiffrement symétrique par la clé secrète desdites données est de préférence réalisé au moyen de la passerelle embarquée.

La passerelle embarquée peut être configurée pour établir une connexion WiFi, ou selon une norme téléphonique 3G/4G/5G avec le point d'accès.

**Brève description des figures**

D'autres caractéristiques et avantages de l'invention apparaîtront à la lecture d'un mode de réalisation préférentiel de l'invention, décrit en référence aux figures jointes parmi lesquelles :

[Fig. 1] représente de manière schématique l'architecture d'un réseau dans lequel peut être mise en œuvre la méthode de traitement confidentiel des données d'un véhicule selon un mode de réalisation de l'invention ;
[Fig. 2] représente de manière schématique les échanges entre des entités du réseau de la Fig. 1 lors de la mise en œuvre d'une méthode de traitement confidentiel des données d'un véhicule selon un mode de réalisation de l'invention ;
[Fig. 3] représente de manière schématique une variante des échanges entre entités de réseau lors de la mise en œuvre d'une méthode de traitement confidentiel des données d'un véhicule selon un mode de réalisation de l'invention.

**Description des modes de réalisation**

On considérera dans la suite un véhicule équipé de capteurs embarqués et susceptible de se connecter à un réseau véhiculaire via une passerelle.

Les capteurs embarqués sont typiquement des capteurs de position (récepteur GPS, par exemple), de vitesse et d'accélération du véhicule selon différents axes, de vitesse de rotation des roues du véhicule, etc., capables de mesurer des paramètres cinématiques du véhicule. En outre, d'autres types de capteurs embarqués peuvent aussi être prévus, tels que des capteurs de consommation instantanée du véhicule, de changement de vitesse, de température des freins etc. Les mesures de ces capteurs sont numérisées et le cas échéant pré-traitées (par exemple au moyen d'une compression de données) au sein du véhicule.

Les différents capteurs sont reliés à un réseau interne du véhicule. Ce réseau interne peut communiquer avec une infrastructure de communication extérieure au moyen d'une passerelle (*gateway*) embarquée. La passerelle en question pourra par exemple utiliser à cet effet la technologie WiFi (IEEE 80211) ou encore les versions adaptées aux communications véhiculaires, telles que IEEE 802.11p (aux Etats-Unis) et ETSI ITS-G5 (en Europe), prévues pour les futurs systèmes de transports intelligents ou C-ITS (*Cooperative Intelligent Transport Systems*)*.* Alternativement, elle pourra utiliser un standard de téléphonie mobile 3G/ 4G/5G. Le cas échéant, si le véhicule n'est pas équipé d'origine d'une passerelle WiFi ou de téléphonie mobile, un dongle comportant un émetteur/récepteur WiFi ou bien conforme à l'un des standards précités pourra être enfiché dans une prise ODB2 (*On Board Diagnostic*) de diagnostic du véhicule.

Les données issues des différents capteurs du véhicule peuvent être transmises à l'infrastructure de communication extérieure au fur et à mesure qu'elles sont générées ou bien stockées dans une mémoire temporaire du véhicule pour être ensuite transférées en masse voire par incréments. Ces données sont ensuite traitées de manière confidentielle par un serveur distant comme nous le verrons plus loin.

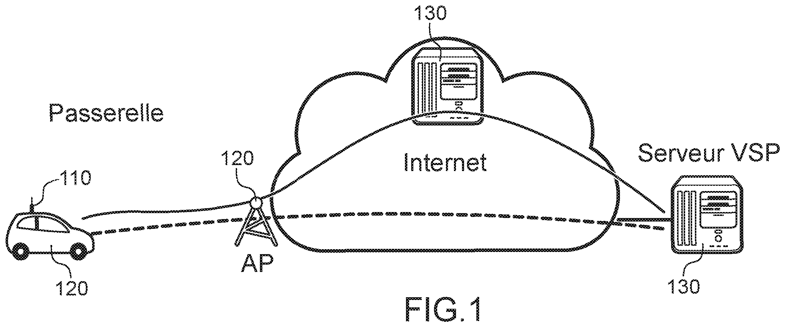

La Fig. 1 représente de manière schématique une architecture de réseau dans lequel peut être mise en œuvre une méthode de traitement confidentiel des paramètres de véhicule.

La passerelle 110, embarquée à bord du véhicule, 100, peut établir une liaison avec un point d'accès AP, 120, que ce soit une borne WiFi ou une station de base (BTS, node B, etc.) d'un réseau de téléphonie mobile.

Dans les systèmes actuels, les données d'un véhicule sont directement transmises à un serveur de fournisseur de service aux véhicules ou VSP (*Vehicle Service Provider*), 130, comme indiqué par un trait discontinu sur la figure. Le fournisseur de service reçoit ainsi les données en clair et peut effectuer des statistiques, classifier des types de conduite, effectuer des diagnostics, réaliser des prévisions, déterminer la responsabilité d'un conducteur en cas d'accident, etc. Par exemple, le fournisseur de service peut être un assureur utilisant ces données pour déterminer la prime d'assurance en fonction du type de conduite du véhicule. Ces données sont toutefois particulièrement sensibles et peuvent être interceptées par un tiers malveillant.

Une première solution consiste à chiffrer les données avant de les transmettre au fournisseur de service. Cependant, cette mesure n'est pas entièrement satisfaisante dans la mesure où le conducteur peut souhaiter ne pas communiquer des données confidentielles au fournisseur de service.

Selon la présente invention, il est proposé d'introduire une plateforme de calcul (*Cloud Computing*), 150, chargée d'effectuer le traitement des données de manière confidentielle, pour le compte du serveur VSP et lui fournir uniquement le résultat de ce traitement.

Plus précisément, le véhicule chiffre les données au moyen d'un chiffrement symétrique, de préférence un chiffrement par flot, utilisant une clé secrète $K_{sym}^{car}$. Il chiffre en outre cette clé secrète par chiffrement homomorphe, au moyen de la clé publique, $HE.pk_{pub}^{vsp}$ d'un cryptosystème de chiffrement asymétrique homomorphe dont le couple clé privée - clé publique ($HE.sk^{vsp}, HE.pk^{vsp}$), propre au serveur VSP. Le point d'accès effectue alors un transchiffrement des données en les décodant dans le domaine homomorphe et les transmet à la plateforme de calcul. La plateforme de calcul effectue ensuite le traitement correspondant de ces données dans le domaine homomorphe avant de les transmettre au serveur VSP.

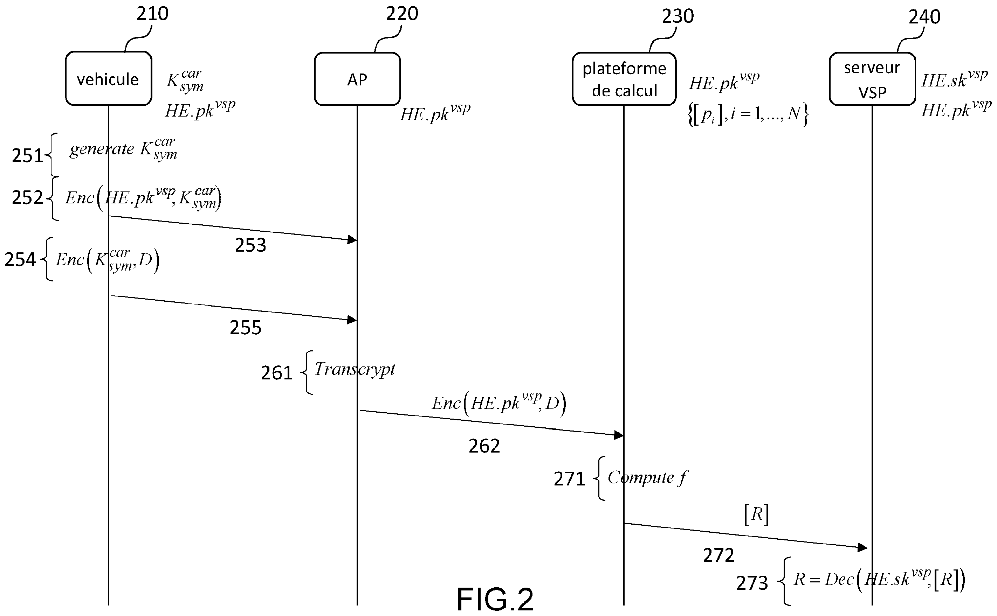

La Fig. 2 représente de manière schématique les échanges entre des entités du réseau de la Fig. 1 lorsqu'une méthode de traitement confidentiel des données du véhicule est mise en œuvre selon un mode de réalisation de l'invention.

On suppose tout d'abord que le fournisseur de service aux véhicules, 240, a préalablement généré un couple de clé privée - clé publique ($HE.sk^{vsp}, HE.pk^{vsp}$) d'un cryptosystème asymétrique homomorphe et a diffusé la clé publique au vehicle 210, au point d'accès 220 et à la plateforme de calcul, 230.

Le véhicule génère en 251 une clé secrète $K_{car}^{sym}$ d'un cryptosytème de chiffrement symétrique. Avantageusement, ce chiffrement symétrique est un chiffrement par flot, autrement dit un flot de clé généré au moyen de la clé symétrique est ajouté au moyen d'une opération XOR aux données binaires en clair. Le véhicule chiffre en 252, la clé secrète au moyen de la clé publique du cryptosystème homomorphe et transmet la clé ainsi chiffrée, $Enc\left(HE.pk^{vsp}, K_{sym}^{car}\right)$, au point d'accès en 253. Par ailleurs, le véhicule effectue en 254 un premier chiffrement des données, *D*, au moyen de cette même clé secrète, soit $Enc\left(K_{sym}^{car}, D\right)$ et les transmet ainsi chiffrées au point d'accès en 255.

A l'étape 261, le point d'accès effectue un transchiffrement des données dans le domaine homomorphe. Autrement dit, le point d'accès chiffre d'abord une seconde fois les données déjà chiffrées, $Enc\left(K_{sym}^{car}, D\right)$ au moyen de la clé publique du cryptosystème homomorphe, pour obtenir des données doublement chiffrées $Enc\left(HE.pk^{vsp}, Enc\left(K_{sym}^{car}, D\right)\right)$. Il effectue ensuite un déchiffrement dans le domaine homomorphe, de ces données doublement chiffrées, au moyen de la clé secrète chiffrée en homomorphe $Enc\left(K_{sym}^{car}, D\right)$. On trouvera une description de cette opération de transchiffrement dans la demande de brevet publiée sous le numéro FR-A-3060165 au nom de la présente Demanderesse. Suite à l'opération de transchiffrement, le point d'accès dispose des données du véhicule chiffrées dans le domaine homomorphe, $Enc(HE.pk^{vsp}, D)$, et les transmet, en 262, à la plateforme de calcul. Il est important de noter que l'opération de transchiffrement est effectuée par le point d'accès et non par la plateforme de calcul elle-même. Cette délégation de transchiffrement permet, entre autres, de ne pas surcharger la plateforme de calcul. Celle-ci n'a à connaitre que les clés publiques des cryptosystèmes homomorphes des différents serveurs de fournisseurs de service aux véhicules, en nombre bien inférieur au nombre de (clés symétriques des) véhicules.

A l'étape 271, la plateforme de calcul effectue le traitement des données dans le domaine homomorphe. Plus précisément, la plateforme de calcul effectue une opération classification des données dans le domaine homomorphe au moyen d'un modèle de classification, comme décrit en détail plus loin. Le modèle de classification peut avoir été obtenu de manière supervisée au moyen d'une base de données d'apprentissage ou bien avoir été construit de manière non supervisée (notamment au moyen d'un simple clustering).

Par exemple, le modèle de classification permettra d'évaluer le style de conduite du véhicule et son appartenance à différentes classes de dangerosité $C_1 C_2, ..., C_K$. Le résultat de la classification peut être fourni au serveur VSP sous la forme d'un vecteur, dit vecteur d'appartenance, de K composantes chiffrées en homomorphe, chacune des composantes représentant l'appartenance à une classe (valeur binaire) ou la probabilité d'appartenance à cette classe (fraction dyadique par exemple).

Le vecteur d'appartenance est transmis au serveur VSP en 272. Ce dernier en déchiffre les composantes au moyen de sa clé privée $HE.sk^{vsp}$ en 273.

L'homme du métier comprendra que la méthode de traitement de données d'un véhicule peut être mise à jour sans difficulté. Le traitement étant effectué par la plateforme de calcul, il suffit de modifier dans ce serveur la fonction de traitement correspondante dans le domaine homomorphe. Il n'est en particulier pas nécessaire de mettre à jour des logiciels dans tous les véhicules abonnés au service. En outre, la fonction de traitement (par exemple la fonction de classification) peut prendre en compte les données de plusieurs véhicules dans la mesure où celles-ci sont chiffrées à l'aide de la même clé publique homomorphe, $HE.pk^{vsp}$. Ceci est avantageux lorsqu'il s'agit de comparer le comportement de deux véhicules en un même lieu (par exemple dans le cadre d'un accident) ou bien lorsque le modèle de classification est entraîné de manière non supervisée. Enfin, on notera que le serveur VSP n'a pas directement accès aux données cinématiques du véhicule, de nature confidentielle, mais seulement au résultat du traitement, par exemple le résultat de la classification de la conduite du véhicule, au moyen d'une fonction de classification $f$.

La fonction de classification $f$ est évaluée dans le domaine homomorphe comme suit :

$$[R] = f\left([D], \{[p_i], i = 1, ..., N\}\right) \tag{1}$$

où l'on a noté pour des raisons de concision $[x] = Enc(HE.pk, x)$, $R$ est le résultat de la classification (par exemple, le vecteur d'appartenance) et $p_i$, $i = 1, ..., N$ sont les paramètres (en clair) de la fonction de classification. On suppose que l'ensemble des paramètres chiffrés en homomorphe a été préalablement fourni à la plateforme de calcul.

Cette évaluation est possible dans le domaine homomorphe dans la mesure où la fonction $f$ est une fonction linéaire ou une fonction polynomiale, des données à classifier.

Comme exemple de classification polynomiale (quadratique), on peut citer un classificateur gaussien.

Comme exemple de fonction linéaire, on peut citer un classificateur par hyperplans.

Le cas d'un classificateur par hyperplans est illustré ci-après dans le cas d'un espace de dimension 2. Les données $D$ sont alors des vecteurs de dimension 2 (accélération selon deux axes par exemple), $D = (x, y)$.

Par exemple, une classe peut être définie par l'intersection de 2 demi-espaces délimités par des hyperplans, s'exprimant dans le domaine des clairs par :

$$
\begin{aligned}
a_1 x + b_1 y \geq c_1 \\
a_2 x + b_2 y \geq c_2
\end{aligned}
\tag{2}
$$

où $a_1, b_1, c_2, a_2, b_2, c_2$ sont les paramètres de la fonction de classification dans le domaine des clairs.

La fonction de classification dans le domaine homomorphe repose sur le calcul du résultat $[R] = ([r_1], [r_2])$, défini par :

$$
\begin{aligned}
[r_1] = [a_1][x] + [b_1][y] - [c_1] \\
[r_2] = [a_2][x] + [b_2][y] - [c_2]
\end{aligned}
\tag{3}
$$

où toutes les opérations algébriques sont définies ici dans le domaine homomorphe.

La position de la donnée $D$ par rapport aux deux hyperplans permet de déterminer la classe à laquelle elle appartient. Ainsi, par exemple, si $[r_1] \geq 0$ et $[r_2] \geq 0$, la donnée $D$ appartiendra à une première classe $C_1$ et, à l'inverse, si $[r_1] \leq$

0 ou $[r_2] \leq 0$ cette donnée appartiendra à une seconde classe $C_2$. La comparaison des résultats dans le domaine homomorphe peut s'effectuer au moyen de circuits booléens pour l'opérateur « > » (plus grand que) sur les représentations binaires des données chiffrées, comme décrit dans l'article de J. Garay et al. intitulé « Practical and secure solutions for integer comparison » publié dans T. Okamoto and X. Wang, editors, Public Key Cryptography - PKC 2007, volume 4450 of Lecture Notes in Computer Science, pages 330-342. Springer Berlin, Heidelberg, 2007.

Alternativement, il est possible d'utiliser une fonction de classification non linéaire et non polynomiale (par exemple classification par réseau neuronal) notamment lorsqu'une telle fonction peut être approximée localement par une fonction polynomiale (série de Taylor par exemple). On pourra trouver un exemple de classification sécurisée par réseau neuronal dans l'article de N. Dowlin et al. intitulé « CryptoNets : applying neural networks to encrypted data with high throughput and accuracy », available at research.microsoft.com/apps/pubs/default.aspx?id.

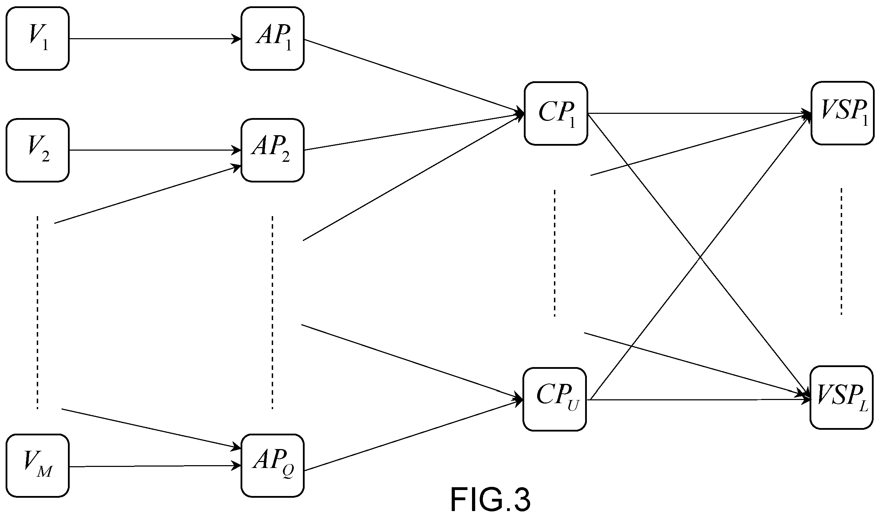

La méthode de traitement confidentiel de données de véhicules a été décrite en relation avec un seul véhicule, un point d'accès, une plateforme de calcul et un serveur de fournisseur de service aux véhicules. Toutefois, en pratique ladite méthode fait intevenir un grand nombre de véhicules et de points d'accès ainsi que plusieurs plateformes de calcul et plusieurs serveurs VSP. Cette situation est illustrée schématiquement en Fig. 3.

On a représenté en Fig. 3 une pluralité de véhicules $V_1,...,V_M$, une pluralité de points d'accès $AP_1,...,AP_Q$, une pluralité de plateformes de calcul, $CR$. $C_R$, ainsi qu'une pluralité de serveurs de fournisseurs de services aux véhicules, $VSP_1,...,VSP_L$.

En règle générale, une plateforme de calcul peut être partagée par plusieurs fournisseurs de service, autrement dit $L < U$. Les clés publiques homomorphes des fournisseurs de service sont diffusées aux plateformes de calcul pouvant effectuant des traitements pour le compte de ces fournisseurs. Autrement dit, une plateforme de calcul $CP_U$ stocke toutes les clés publiques homomorphes $HE.pk_\ell$ des serveurs $VSP_\ell$ susceptibles de lui transmettre des requêtes de traitement. Alternativement, cet ensemble de clés publiques homomorphes peut être stocké dans une base de clés, distribuée ou non. Dans ce cas, la plateforme de calcul qui ne possède pas une clé $HE.pk_\ell$, peut la télécharger de la base de clés en question au moyen de sa référence.

Un point d'accès peut stocker les différentes clés publiques homomorphes des fournisseurs de services, chaque véhicule lui transmettant alors la référence de la clé publique homomorphe utilisée, au moyen d'une simple indication auxiliaire si nécessaire. Alternativement la clé publique homomorphe peut être fournie au point d'accès par le véhicule lui-même. Par exemple, si le point d'accès ne possède pas la clé publique homomorphe correspondant à cette référence, celle-ci peut être obtenue du véhicule.

Un véhicule possède, en règle générale, les clés publiques homomorphes des fournisseurs de services auxquels il est abonné, par exemple celle de son assurance, de l'assurance du loueur du véhicule, du constructeur du véhicule, de la société chargée de l'entretien du véhicule. Comme indiqué précédemment, le véhicule peut transmettre, outre les données chiffrées par la clé, et la clé symétrique chiffrée en homomorphe, la référence de la clé publique homomorphe qu'il a utilisée pour chiffrer la clé symétrique. Cette référence est alors transmise avec les données chiffrées à la plateforme de calcul qui pourra ainsi retrouver la clé publique homomorphe en question voire la télécharger de la base de clés.

**Revendications**

1. Méthode de traitement confidentiel de données d'un véhicule (210), les données étant transmises par une passerelle embarquée du véhicule à un point d'accès (220) d'un réseau externe à ce dernier et le résultat du traitement étant transmis (272) à un serveur d'un fournisseur de service (240), le fournisseur ayant généré un couple de clé privée - clé publique d'un cryptosystème asymétrique de chiffrement homomorphe, **caractérisée en ce que** :

   - le véhicule génère (251) une clé secrète d'un cryptosytème de chiffrement symétrique et chiffre (252) ladite clé secrète au moyen de la clé publique de chiffrement homomorphe ;
   - le véhicule chiffre (254) lesdites données au moyen de la clé secrète de chiffrement symétrique;
   - le véhicule transmet (253,255) la clé secrète chiffrée au moyen de la clé publique de chiffrement homomorphe ainsi que les données ainsi chiffrées au point d'accès (220), ledit point d'accès effectuant (261) un second chiffrement des données ainsi chiffrées, au moyen de la clé publique de chiffrement homomorphe , pour obtenir des données doublement chiffrées puis, au moyen de la clé secrète chiffrée en homomorphe, un déchiffrement dans le domaine homomorphe des données doublement chiffrées, pour obtenir des données chiffrées en homomorphe, et les transmettant (262) à une plateforme de calcul ;
   - la plateforme de calcul effectue (271), dans le domaine homomorphe, le traitement des données reçues du point d'accès (220) et transmet (272) le résultat du traitement, sous forme chiffrée en homomorphe, au serveur du fournisseur de service (240).

**2.** Méthode de traitement confidentiel de données d'un véhicule, selon la revendication 1, **caractérisée en ce que** le traitement confidentiel est une classification desdites données, le résultat du traitement donnant une classe, parmi une pluralité de classes prédéterminées, à laquelle appartiennent lesdites données ou les probabilités respectives que lesdites données appartiennent à ces classes prédéterminées.

**3.** Méthode de traitement confidentiel de données d'un véhicule, selon la revendication 2, **caractérisée en ce que** la classification est une classification par hyperplans, chaque hyperplan étant défini par une fonction affine dans le domaine des clairs.

**4.** Méthode de traitement confidentiel de données d'un véhicule selon la revendication 2 ou 3, **caractérisée en ce que** lesdites données comprennent des données cinématiques du véhicule.

**5.** Méthode de traitement confidentiel de données d'un véhicule selon la revendication 4, **caractérisée en ce que** les classes prédéterminées sont des classes de dangerosité de conduite du véhicule.

**6.** Méthode de traitement confidentiel de données d'un véhicule selon la revendication 4 ou 5, **caractérisée en ce que** la classification est obtenue par une fonction de classification comprenant en argument les données cinématiques d'une pluralité de véhicules.

**7.** Méthode de traitement confidentiel de données d'un véhicule, selon l'une des revendications précédentes, **caractérisée en ce que** le chiffrement symétrique est un chiffrement par flot de clé.

**8.** Méthode de traitement confidentiel de données d'un véhicule, selon l'une des revendications précédentes, **caractérisée en ce que** le chiffrement symétrique par la clé secrète desdites données est réalisée au moyen de la passerelle embarquée.

**9.** Méthode de traitement confidentiel de données d'un véhicule, selon l'une des revendications précédentes, **caractérisée en ce que** la passerelle embarquée est configurée pour établir une connexion WiFi, ou selon une norme téléphonique 3G/4G/5G avec le point d'accès.

**Patentansprüche**

**1.** Verfahren zur vertraulichen Verarbeitung von Daten eines Fahrzeugs (210), wobei die Daten über ein in dem Fahrzeug eingebautes Gateway an einen Zugangspunkt (220) eines externen Netzwerks des Fahrzeugs übertragen werden und das Ergebnis der Übertragung an einen Server eines Dienstleisters (240) übertragen (272) wird, wobei der Anbieter ein Paar von privatem Schlüssel und öffentlichem Schlüssel eines asymmetrischen, homomorphen Verschlüsselungssystems generiert hat, **dadurch gekennzeichnet, dass**:

- das Fahrzeug einen geheimen Schlüssel eines symmetrischen Verschlüsselungssystems generiert (251) und verschlüsselt (252) den geheimen Schlüssel mittels des öffentlichen homomorphen Verschlüsselungsschlüssels;
- das Fahrzeug die Daten mittels des geheimen Schlüssels zu der symmetrischen Verschlüsselung verschlüsselt (254);
- das Fahrzeug den verschlüsselten geheimen Schlüssel mittels des öffentlichen homomorphen Verschlüsselungsschlüssels sowie die so verschlüsselten Daten an den Zugangspunkt (220) überträgt (253,255), wobei der Zugangspunkt eine zweite Verschlüsselung der so verschlüsselten Daten mittels des öffentlichen homomorphen Verschlüsselungsschlüssels durchführt (261), um doppelt verschlüsselte Daten und anschließend, mittels des homomorph verschlüsselten geheimen Schlüssels, eine Entschlüsselung im homomorphen Bereich der doppelt verschlüsselten Daten zu erhalten, um homomorph verschlüsselte Daten zu erhalten und diese an eine Rechenplattform zu übertragen (262);
- die Rechenplattform in dem homomorphen Bereich die Verarbeitung der von dem Zugangspunkt (220) empfangenen Daten durchführt (271) und das Ergebnis der Verarbeitung in homomorph verschlüsselter Form an den Server des Dienstleisters (240) überträgt (272).

**2.** Verfahren zur vertraulichen Verarbeitung von Daten eines Fahrzeugs, nach Anspruch 1, **dadurch gekennzeichnet, dass** die vertrauliche Verarbeitung eine Klassifizierung der Daten ist, wobei das Ergebnis der Verarbeitung eine Klasse aus einer Vielzahl von vorbestimmten Klassen ergibt, zu der die Daten gehören, oder die jeweiligen Wahrscheinlichkeiten, dass die Daten zu diesen vorbestimmten Klassen gehören.

3. Verfahren zur vertraulichen Verarbeitung von Daten eines Fahrzeugs, nach Anspruch 2, **dadurch gekennzeichnet, dass** die Klassifizierung eine Hyperplanklassifizierung ist, wobei jeder Hyperplan durch eine im Hellfeldbereich verwandte Funktion definiert ist.

4. Verfahren zur vertraulichen Verarbeitung von Daten eines Fahrzeugs, nach Anspruch 2 oder 3, **dadurch gekennzeichnet, dass** die Daten kinematische Fahrzeugdaten umfassen.

5. Verfahren zur vertraulichen Verarbeitung von Daten eines Fahrzeugs, nach Anspruch 4, **dadurch gekennzeichnet, dass** die vorbestimmten Klassen Gefahrenklassen für das Fahren des Fahrzeugs sind.

6. Verfahren zur vertraulichen Verarbeitung von Daten eines Fahrzeugs nach Anspruch 4 oder 5, **dadurch gekennzeichnet, dass** die Klassifizierung durch eine Klassifizierungsfunktion erreicht wird, die als Argument die kinematischen Daten einer Vielzahl von Fahrzeugen umfasst.

7. Verfahren zur vertraulichen Verarbeitung von Daten eines Fahrzeugs, nach einem der vorhergehenden Ansprüche, **dadurch gekennzeichnet, dass** die symmetrische Verschlüsselung eine Schlüsselstromverschlüsselung ist.

8. Verfahren zur vertraulichen Verarbeitung von Daten eines Fahrzeugs, nach einem der vorhergehenden Ansprüche, **dadurch gekennzeichnet, dass** die symmetrische Verschlüsselung durch den geheimen Schlüssel der Daten mittels des Onboard-Gateways erfolgt.

9. Verfahren zur vertraulichen Verarbeitung von Daten eines Fahrzeugs nach einem der vorhergehenden Ansprüche, **dadurch gekennzeichnet, dass** das Onboard-Gateway so konfiguriert ist, dass es eine WLAN-Verbindung oder nach einem 3G/4G/5G-Telefonstandard mit dem Zugangspunkt herstellt.

**Claims**

1. A method for confidentially processing data of a vehicle (210), the data being transmitted by an on-board gateway of the vehicle to an access point (220) of a network external to the latter and the processing result being transmitted (272) to a server of a service provider (240), the provider having generated a private key-public key pair of a homomorphic encryption asymmetric cryptosystem, **characterised in that**:

   - the vehicle generates (251) a secret key of a symmetric encryption cryptosystem and encrypts (252) said secret key by means of the homomorphic encryption public key;
   - the vehicle encrypts (254) said data by means of the symmetric encryption secret key;
   - the vehicle transmits (253, 255) the homomorphically encrypted secret key by means of the homomorphic encryption public key as well as the data thus encrypted to the access point (220), said access point performing (261) a second encryption of the data thus encrypted, by means of the homomorphic encryption public key, to obtain doubly encrypted data and then, by means of the homomorphically encrypted secret key, a decryption of the doubly encrypted data in the homomorphic domain, to obtain homomorphically encrypted data, and transmitting them (262) to a computing platform;
   - the computing platform performs (271), in the homomorphic domain, processing of the data received from the access point (220) and transmits (272) the processing result, in homomorphically encrypted form, to the server of the service provider (240).

2. The method for confidentially processing data of a vehicle according to claim 1, **characterised in that** the confidential processing is a classification of said data, the processing result giving one of a plurality of predetermined classes to which said data belong, or the respective probabilities that said data belong to those predetermined classes.

3. The method for confidentially processing data of a vehicle according to claim 2, **characterised in that** the classification is a hyperplane classification, each hyperplane being defined by an affine function in the cleartext domain.

4. The method for confidentially processing data of a vehicle according to claim 2 or 3, **characterised in that** said data comprises kinematic data of the vehicle.

**5.** The method for confidentially processing data of a vehicle according to claim 4, **characterized in that** the predetermined classes are driving dangerousness classes of the vehicle.

**6.** The method for confidentially processing data of a vehicle according to claim 4 or 5, **characterized in that** the classification is obtained by a classification function comprising, as an argument, the kinematic data of a plurality of vehicles.

**7.** The method for confidentially processing data according to one of the preceding claims, **characterised in that** the symmetric encryption is a key stream encryption.

**8.** The method for confidentially processing data of a vehicle according to one of the preceding claims, **characterised in that** the symmetric encryption by the secret key of said data is performed by means of the on-board gateway.

**9.** The method for confidentially processing data of a vehicle according to one of the preceding claims, **characterised in that** the on-board gateway is configured to establish a Wi-Fi connection, or according to a 3G/4G/5G telephone standard, with the access point.

Passerelle

130

Internet

Serveur VSP

110

120

AP

120

130

FIG.1

FIG.2

210

vehicule $K_{sym}^{car}$
$HE.pk^{vsp}$

220

AP
$HE.pk^{vsp}$

230

plateforme de calcul $HE.pk^{vsp}$
$\{[p_i], i = 1, ..., N\}$

240

serveur VSP $HE.sk^{vsp}$
$HE.pk^{vsp}$

251 $\{$ generate $K_{sym}^{car}$

252 $\{$ $Enc\left(HE.pk^{vsp}, K_{sym}^{car}\right)$

253

254 $\{$ $Enc\left(K_{sym}^{car}, D\right)$

255

261 $\{$ Transcrypt

$Enc\left(HE.pk^{vsp}, D\right)$

262

271 $\{$ Compute $f$

$[R]$

272

273 $\{$ $R = Dec\left(HE.sk^{vsp}, [R]\right)$

EP 3 977 667 B1

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20190023279 A

- FR 3060165 A

**Littérature non-brevet citée dans la description**

- **N. RIZZO et al.** Privacy preserving driving style recognition. *Proc. of International Conference on Connected Vehicles and Expo (ICCVE)*, 19 October 2015

- Practical and secure solutions for integer comparison. **J. GARAY et al.** Lecture Notes in Computer Science. Springer, 2007, vol. 4450, 330-342
- **N. DOWLIN et al.** *CryptoNets : applying neural networks to encrypted data with high throughput and accuracy*